# EUROPÄISCHE PATENTSCHRIFT

(11) **EP 0 593 750 B1**
(45) Veröffentlichungstag und Bekanntmachung des Hinweises auf die Patenterteilung: **09.08.1995**
(21) Anmeldenummer: 93911766.9
(22) Anmeldetag: 20.04.1993
(51) Int. Cl.: F16B 35/04, E04D 3/36, F16B 25/10

(54) **SCHRAUBE**
SCREW
VIS

(30) Priorität: 15.05.1992 DE 4216197
(43) Veröffentlichungstag der Anmeldung: 27.04.1994
(73) Patentinhaber: SFS Industrie Holding AG, 9435 Heerbrugg (CH)
(72) Erfinder: KÖPPEL, Norbert, CH-9436 Balgach (CH)
(74) Vertreter: Ludescher, Hans
(86) Internationale Anmeldenummer: EP9300949
(87) Internationale Veröffentlichungsnummer: WO9323680

(56) Entgegenhaltungen:
- EP-A- 0 090 453
- EP-A- 0 313 927
- DE-C- 590 969

## Beschreibung

Die Erfindung betrifft eine Schraube mit einem auf einem Teil ihrer Länge mit einem Gewinde versehenen Schaft und einem Schraubenkopf, wobei zwischen einem am freien Endbereich des Schaftes ausgebildeten Gewinde und dem Schraubenkopf wenigstens ein gewindefreier Schaftabschnitt vorgesehen ist.

Solche Schrauben werden beispielsweise bei der Befestigung von Sandwich-Elementen bei der Wand- und Dachverkleidung, bei der Befestigung von Dachelementen wie z.B. Wellplatten oder aber bei der Befestigung von Abdeckbahnen auf einem Flachdach eingesetzt. Die Schrauben greifen mit einem an ihrem freien Endbereich ausgebildeten Gewinde in einen festen Unterbau, z.B. einen Stahl- oder Holzträger oder eine Blechkonstruktion, ein und ragen relativ weit von diesem festen Unterbau weg. Dies deshalb, weil die Schrauben aufgrund der Profilierung der Platten, der Dicke der Sandwich-Elemente bzw. der Dicke der zu durchdringenden Isolation entsprechend lang sein müssen.

Nun ergeben sich bei solchen Schrauben immer wieder Probleme, da diese bei dieser Befestigungsart nicht nur durch Längs- und Querzugkräfte beansprucht werden, sondern auch auf Biegung. Diese Biegebeanspruchung resultiert aus der unterschiedlichen Temperaturverformung des festen Unterbaus und der äußeren Oberfläche des befestigten Teils. Bei einer Sandwich-Platte beispielsweise ergibt sich eine relativ hohe Temperaturdifferenz zwischen der Außen- und der Innenschale, wenn die äußere Schale durch Sonneneinstrahlung erwärmt wird.

Die heute gebräuchlichen Befestiger in diesem Einsatzbereich sind durch diese Einwirkung stark belastet, da die ganze Durchbiegung am Schraubenkopf auf das am freien Endbereich des Schaftes ausgebildete Gewinde übertragen wird. Diese wechselnde Durchbiegung im Bereich des Gewindes führt nach einer entsprechenden Anzahl von Wechselbewegungen zu einer Rißbildung im Gewindekern und damit gezwungenermaßen zu dessen Bruch.

Die vorliegende Erfindung hat sich daher zur Aufgabe gestellt, eine Schraube der eingangs genannten Art zu schaffen, bei welcher der Gewindebereich von der Biegebelastung zumindest soweit befreit wird, daß im Bereich des Gewindekerns eine Rißbildung durch Biegebelastung ausgeschlossen werden kann.

Erfindungsgemäß gelingt dies dadurch, daß im gewindefreien Schaftabschnitt wenigstens eine als umfangsgeschlossene Rille ausgebildete, durch Materialabarbeitung gefertigte Nut vorgesehen ist.

Durch diese erfindungsgemäße Maßnahme wird die Biegebelastung auf die Schraube vom gewindefreien Schaftabschnitt übernommen, und zwar von den durch die Nut bzw. Nuten geschwächten Abschnitte.

Als wesentlicher erfinderischer Schritt ist dabei anzusehen, daß diese Nuten durch Materialabarbeitung gefertigt sind, also beispielsweise durch Drehen oder Schleifen hergestellt werden, da nur dadurch eine entsprechende Materialschwächung erfolgt, damit die Schraube eben in diesem Bereich biegeelastisch wird. Die ansonsten bedingt durch den preßtechnisch unabänderlichen Drahtdurchmesser vorhandene, sehr lange unelastische Zone wird gerade durch diese Nut bzw. Nuten in eine elastische Zone umgewandelt, welche die Biegebelastung aufnimmt. Es wird eine optimale Verbesserung des Biegeverhaltens erreicht, wobei außerdem eben diese Biegebelastung aus dem durch die Spitzenwirkung besonders gefährdeten Gewindebereich herausgeführt wird.

Gerade durch die Herstellung der Nut durch Materialabarbeitung ergibt sich eben diese elastische Wirkung des gewindefreien Schaftabschnittes. Wenn nämlich diese Rillen durch einen Walzvorgang hergestellt würden, dann würde im Bereich der Rillen sozusagen eine Versteifung bewirkt, da die Fasern in diesem Bereich noch verdichtet würden. Es hat sich auch bei Versuchen gezeigt, daß die erfindungsgemäße Aufgabe bei einem Walzvorgang für die Herstellung dieser Nut nicht gelöst werden kann, denn dann wird die Biegebelastung nach wie vor auf das am freien Endbereich der Schraube ausgebildete Gewinde übertragen und der gewindefreie Schaftabschnitt bleibt trotz der eingewalzten Nuten unelastisch.

Weiters wird gemäß der vorliegenden Erfindung vorgeschlagen, daß der am Grund der Nut verbleibende Restquerschnitt des Schaftes wenigstens dem Kernquerschnitt des in Richtung zum freien Ende des Schaftes folgenden Gewindebereiches entspricht. Dadurch ist gewährleistet, daß das bei einer selbstbohrenden Schraube für den Bohrvorgang und die Herstellung des Gewindes notwendige Drehmoment übertragen werden kann, und daß die erforderlichen Werte für die Zugbelastung erhalten bleiben. Es hat sich deshalb eben als zweckmäßig herausgestellt, daß mit dem Restquerschnitt im Bereich der Nut nicht unter den Kernquerschnitt im Gewindebereich zu gehen ist.

Nach einer Ausführungsvariante wird vorgeschlagen, daß zwei oder mehrere mit axialem Abstand aufeinander folgende oder unmittelbar aneinander anschließende Nuten in einem oder verteilt auf mehrere gewindefreie(n) Abschnitt(e) vorgesehen sind. Je nach der erforderlichen Elastizität des gewindefreien Schaftabschnittes und der Notwendigkeit der Aufnahme von Biegekräften in bestimmten Bereichen bezogen auf die Länge des Schaftes sind also verschiedene Ausführungsvarianten denkbar, um eine Anpassung an besondere Einsatzzwecke zu ermöglichen.

Es ist daher in diesem Zusammenhang möglich, daß in axialer Richtung aufeinander folgende Nuten gleiche Abmessungen aufweisen. Andererseits ist es denkbar, daß in axialer Richtung aufeinander folgende Nuten verschiedene Abmessungen und/oder Querschnittsformen aufweisen. Es sind also auf verschiedene Art und Weise Möglichkeiten gegeben, Schrauben für spezielle Belastungsfälle mit einem gezielten Biegeverhalten auszurüsten.

Eine weitere Ausführungsvariante sieht vor, daß der vom Grund der Nut begrenzte Restquerschnitt des Schaftes in der Außenbegrenzung kreisförmig oder polygonal ausgebildet ist. Eine kreisförmige Außenbegrenzung ist sowohl durch einen Dreh- als auch durch einen Schleifvorgang herstellbar, wogegen eine polygonale Außenbegrenzung nur durch einen Schleifvorgang gefertigt werden kann.

Weitere erfindungsgemäße Merkmale und besondere Vorteile werden in der nachstehenden Beschreibung anhand der Zeichnung noch näher erläutert. Es zeigen:
- Fig. 1: eine Schraube in Vorderansicht, wobei eine der Schraube zugeordnete Unterlegscheibe im Schnitt dargestellt ist;
- Fig. 2: ein Einsatzbeispiel für eine solche Schraube bei der Befestigung eines Sandwich-Elementes auf einem Metallträger, wobei dieses Einsatzbeispiel im Schnitt dargestellt ist.

Die Schraube 1 weist einen Schaft 2 sowie einen Schraubenkopf 3 auf. Unterhalb des Schraubenkopfes ist eine Unterlegscheibe 4 eingesetzt, welche beispielsweise aus einer Metallscheibe 5 und einer Dichtungsscheibe 6 bestehen kann. Diese Unterlegscheibe 4 hat jedoch mit der vorliegenden Erfindung nichts zu tun.

Am freien Endbereich des Schaftes 2 ist ein Gewinde 7 vorgesehen und am freien Ende 8 ist eine Bohrspitze 9 ausgebildet. Die Bohrspitze 9 ist hier als plättchenförmiger Teil dargestellt. Es kann hier natürlich jede Art von Bohrspitze eingesetzt werden oder aber es ist überhaupt keine Bohrspitze vorhanden, denn es wäre auch eine Lösung einer Schraube denkbar, welche in ein vorbereitetes Loch eingedreht wird und sich dort das Gewinde selbst schneidet, oder aber es könnte auch eine Schraube sein, die in eine vorbereitete Gewindebohrung eingedreht wird.

Bei der hier gezeigten speziellen Schraube 1 ist außerdem ein zweiter Gewindeabschnitt 10 vorgesehen, welcher als Stützgewinde dient, um gerade bei der Befestigung von Sandwich-Elementen 11 die obere Deckplatte 12 abzustützen.

Die Schraube 1 weist wenigstens einen gewindefreien Schaftabschnitt 13 auf, wobei in diesem gewindefreien Schaftabschnitt 13 wenigstens eine als umfangsgeschlosse ne Rille ausgebildete Nut 14 vorgesehen ist. Beim gezeigten Ausführungsbeispiel sind drei solcher Nuten 14 vorgesehen. Diese Nuten sind durch Materialabarbeitung, also beispielsweise durch Drehen oder Schleifen, hergestellt worden und bewirken dadurch, daß der gewindefreie Schaftabschnitt 13 zu einem elastischen Schaftabschnitt wird. Der am Grund der Nut 14 verbleibende Restquerschnitt entsprechend dem Durchmesser A entspricht wenigstens dem Kernquerschnitt des in Richtung zum freien Ende 8 des Schaftes folgenden Gewindebereiches 7, so daß also der erforderliche Querschnitt für das aufzubringende Drehmoment beim Bohrvorgang und beim Gewindeschneiden gegeben ist.

Die in axialer Richtung aufeinander folgenden Nuten 14 weisen beim gezeigten Ausführungsbeispiel gleiche Abmessungen auf und folgen mit axialem Abstand aufeinander. Im Rahmen der Erfindung wäre es auch denkbar, daß diese aufeinander folgenden Nuten unmittelbar aneinander anschließen und nicht nur in einem gewindefreien Schaftabschnitt 13 angeordnet sind, sondern verteilt auf mehrere gewindefreie Schaftabschnitte 13. Es wäre ja ein entsprechender Einsatz der vorliegenden Erfindung auch bei Schrauben denkbar, bei welchen mehrere mit Abstand aufeinander folgende Gewindeabschnitte oder sonstige Bereiche vorgesehen sind, zwischen denen jeweils wieder glatte Schaftabschnitte vorgesehen sind. Möglich wäre es daher auch, daß die in axialer Richtung aufeinander folgenden Nuten 14 verschiedene Abmessungen und/oder Querschnittsformen aufweisen. In der Zeichnung ist eine Ausführung dargestellt, bei der die Nuten im Querschnitt annähernd halbkreisförmig ausgebildet sind. Es wäre aber auch möglich, diesen Nutquerschnitt polygonförmig oder beispielsweise trapezförmig auszuführen.

Der vom Grund der Nut 14 begrenzte Restquerschnitt des Schaftes 2 ist bei der gezeigten Ausführungsform als Kreis mit dem Durchmesser A ausgeführt. Bei einer solchen kreisförmigen Ausbildung des Restquerschnittes kann die Nut 14 sowohl in einem Dreh- als auch in einem Schleifvorgang abgearbeitet werden. Es wäre aber auch möglich, diesen Restquerschnitt mit einer polygonalen Außenbegrenzung auszuführen, wobei dann die Herstellung natürlich nur in einem Schleifverfahren erfolgen kann.

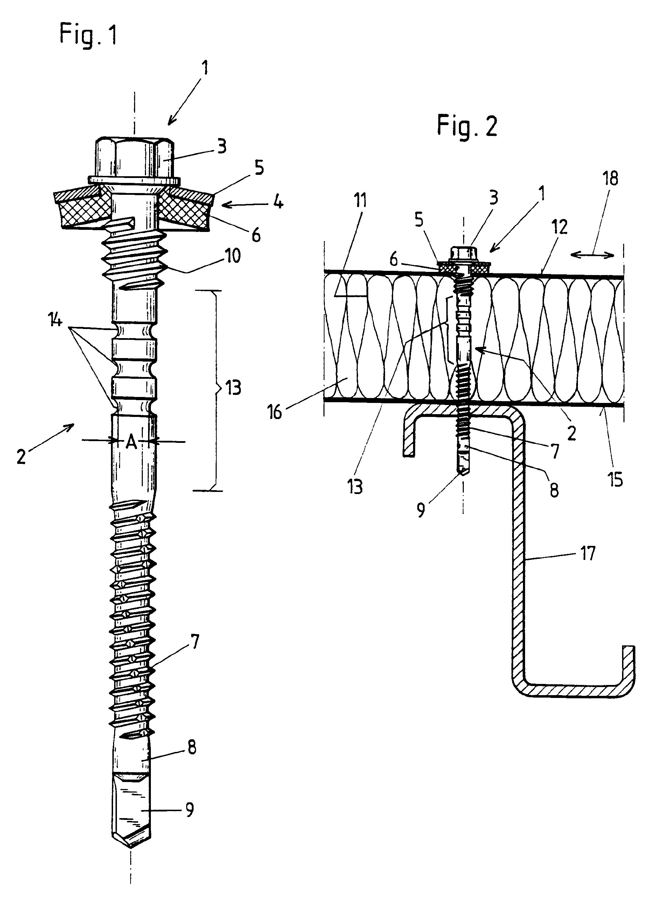

In Fig. 2 ist eine solche Schraube 1 im Einsatz bei der Befestigung eines Sandwich-Elementes 11 gezeigt. Solche Sandwich-Elemente 11 bestehen in der Regel aus einer äußeren Deckplatte 12, einer innenliegenden Deckplatte 15 sowie einer dazwischenliegenden Isolierung 16. Dieses Sandwich-Element 11 soll nun an einem festen Unterbau, welcher hier durch einen Metallträger 17 gebildet wird, befestigt werden. Die Schraube wird durch das Sandwich-Element 11 in den Träger 17 eingeschraubt, wobei dadurch die Befestigung erreicht ist. Bei Sonneneinstrahlung auf die äußere Deckplatte 12 ergeben sich durch Wärmedehnungen Relativverschiebungen zwischen der Deckplatte 12 und der Deckplatte 15 in den Pfeilrichtungen 18. Da sich die Schraube 1 sowohl bezüglich der Deckplatte 12 als auch bezüglich der Deckplatte 15 nicht bewegen kann, ergibt sich eine entsprechende Biegebelastung auf den Schaft 2 der Schraube. Diese wechselnden Biegebelastungen werden durch die erfindungsgemäße Ausgestaltung vom gewindefreien Schaftabschnitt 13 aufgenommen und nicht wie bisher üblich in das Gewinde 7 eingeleitet. Im gewindefreien Schaftabschnitt entsteht ein relativ elastischer Bereich, der eine maximale Anzahl von Wechselbewegungen ausführen kann, ohne daß die Gefahr eines Bruches gegeben ist.

Auf die gleiche Weise können die erfindungsgemäßen Maßnahmen bei Schrauben bzw. sonstigen Befestigern eingesetzt werden, welche beispielsweise bei der Befestigung von Wellplatten auf Dächern oder an Wänden oder bei der Befestigung von Folien auf Flachdächern eingesetzt werden. Die erfindungsgemäßen Maßnahmen wirken sich besonders auch dann vorteilhaft aus, wenn Schrauben bzw. sonstige Befestiger aus einem rostfreien Material eingesetzt werden. Solche Schrauben aus einem relativ teuren Material sollten gerade im Hinblick auf eine lange Lebensdauer konzipiert werden. Durch die Möglichkeit der Bildung eines biegeelastischen Bereiches im Bereich des Schraubenschaftes ist gerade die Bruchgefahr im Gewindebereich beseitigt worden und somit erhöht sich auch die Lebensdauer der Schrauben oder sonstigen Befestiger.

## Patentansprüche

1. Schraube mit einem auf einem Teil ihrer Länge mit einem Gewinde versehenen Schaft und einem Schraubenkopf, wobei zwischen einem am freien Endbereich des Schaftes ausgebildeten Gewinde und dem Schraubenkopf wenigstens ein gewindefreier Schaftabschnitt vorgesehen ist, **dadurch gekennzeichnet,** daß im gewindefreien Schaftabschnitt (13) wenigstens eine als umfangsgeschlossene Rille ausgebildete, durch Materialabarbeitung gefertigte Nut (14) vorgesehen ist.

2. Schraube nach Anspruch 1, dadurch gekennzeichnet, daß der am Grund der Nut (14) verbleibende Restquerschnitt des Schaftes (2) wenigstens dem Kernquerschnitt des in Richtung zum freien Ende des Schaftes (2) folgenden Gewindebereiches (7) entspricht.

3. Schraube nach Anspruch 1, dadurch gekennzeichnet, daß zwei oder mehrere mit axialem Abstand aufeinander folgende oder unmittelbar aneinander anschließende Nuten (14) in einem oder verteilt auf mehrere gewindefreie(n) Abschnitt(e) (13) vorgesehen sind.

4. Schraube nach einem der Ansprüche 1 bis 3, dadurch gekennzeichnet, daß in axialer Richtung aufeinander folgende Nuten (14) gleiche Abmessungen aufweisen.

5. Schraube nach einem der Ansprüche 1 bis 3, dadurch gekennzeichnet, daß in axialer Richtung aufeinander folgende Nuten (14) verschiedene Abmessungen und/oder Querschnittsformen aufweisen.

6. Schraube nach einem der vorhergehenden Ansprüche, dadurch gekennzeichnet, daß der vom Grund der Nut (14) begrenzte Restquerschnitt des Schaftes (2) in der Außenbegrenzung kreisförmig oder polygonal ausgebildet ist.

## Claims

1. A screw with a shank provided with a thread along at least part of its length and with a screw head, wherein at least one threadless shank portion is provided between a thread formed at the free end region of the shank and the screw head, characterised in that at least one groove (14), which is the form of a circumferentially closed groove produced by material machining, is provided in the threadless shank portion (13).

2. A screw according to Claim 1, characterised in that the residual cross-section of the shank (2) remaining at the bottom of the groove (14) corresponds at least to the core cross-section of the threaded region (7) following in the direction of the free end of the shank (2).

3. A screw according to Claim 1, characterised in that two or more grooves (14) succeeding one another with axial spacing or immediately adjoining one another are provided in one threadless portion (13) or spaced apart on a plurality of threadless portions (13).

4. A screw according to any one of Claims 1 to 3, characterised in that grooves (14) following one another in axial direction have the same dimensions.

5. A screw according to any one of Claims 1 to 3, characterised in that grooves (14) following one another in axial direction have different dimensions and/or cross-sectional shapes.

6. A screw according to any one of the preceding Claims, characterised in that the residual cross-section of the shank (2) delimited by the bottom of the groove (14) is of circular or polygonal form in the outer boundary.

## Revendications

1. Vis comportant un corps muni d'un filetage sur une partie de sa longueur et d'une tête de vis, et entre un filetage prévu à l'extrémité libre du corps et la tête de vis, il y a au moins un segment de corps sans filetage, vis caractérisée en ce que le segment de corps (13) sans filetage a au moins une rainure (14), réalisée par l'usinage de la matière, et qui est en forme de gorge périphérique fermée.

2. Vis selon la revendication 1, caractérisée en ce que la section résiduelle du corps (2) qui subsiste au fond de la rainure (14) correspond au moins à la section du fond de gorge de la zone filetée (7) qui se trouve en aval, en direction de l'extrémité libre du corps (2).

3. Vis selon la revendication 1, caractérisée par deux ou plusieurs rainures (14) directement adjacentes ou qui se suivent avec un intervalle axial, sur un segment sans filetage (13) ou réparties entre plusieurs segments sans filetage (13).

4. Vis selon l'une des revendications 1 à 3, caractérisée en ce que les rainures (14) qui se suivent dans la direction axiale ont les mêmes dimensions.

5. Vis selon l'une des revendications 1 à 3, caractérisée en ce que les rainures (14) qui se suivent dans la direction axiale ont des dimensions et/ou des formes de sections différentes.

6. Vis selon l'une des revendications précédentes, caractérisée en ce que la section résiduelle du corps (2), délimitée par le fond de la rainure (14), a une forme extérieure circulaire ou polygonale.
